Europäisches Patentamt

European Patent Office

Office européen des brevets

(19)

(11) Publication number : **0 668 456 A2**

## (12) EUROPEAN PATENT APPLICATION

(21) Application number : 95200184.0

(22) Date of filing : 26.01.95

(51) Int. Cl.6 : **F16H 61/06**

(30) Priority : **17.02.94 GB 9403023**

(43) Date of publication of application :
**23.08.95 Bulletin 95/34**

(84) Designated Contracting States :
**DE FR IT**

(71) Applicant : **ACG FRANCE**
**56 à 68 Avenue Louis Roche**
**F-92231 Gennevilliers (FR)**

(72) Inventor : **Felder, Jean-Jacques**
**8 Impasse St Nicolas**
**F-67150 Erstein (FR)**
Inventor : **Heitz, Dominique**
**3 Rue de la Grundgrube**
**F-67114 Eschau (FR)**

(74) Representative : **Denton, Michael John et al**
**Patent Section**
**1st Floor**
**Gideon House**
**28 Chapel Street**
**Luton Bedfordshire LU1 2SE (GB)**

(54) **Method and apparatus for controlling a gear change in an automatic transmission.**

(57) A transmission controller (40) is operative to measure engine speed from an engine speed sensor (46) or on the basis of a throttle position sensor (14) and to control the fill time and shift time of a gear change by adjusting the fill pressure and shift pressure applied to the on-coming clutch (C1-C5) substantially independently of one another. In use, the controller (40) stores a plurality of best fill pressures and best shift pressures for the various types of gear changes and for various engine speed ranges. More efficient gear change can be provided together with a reduction in clutch wear.

Fig.2.

EP 0 668 456 A2

The present invention relates to a method of controlling a gear change in an automatic transmission and to transmission control apparatus.

Generally, an automatic transmission for a motor vehicle includes a number of gear elements coupling its input and output shafts together and a related number of torque establishing devices such as clutch or brakes which are selectively engageable to activate certain gear elements so as to provide a desired speed ratio between the input and output shafts. The input shaft is connected to the vehicle engine through a fluid coupling, such as a torque converter, and the output shaft is connected directly to the vehicle wheels. The terms "clutch" and "torque transmitting device" are used hereinafter to refer to brakes as well as clutches.

Shifting from one forward speed ratio to another is performed in response to engine throttle and vehicle speed and generally involves disengaging the clutch or clutches associated with the current speed ratio (hereinafter referred to as the off-going clutch or torque transmitting device) and engaging the clutch or clutches associated with the desired speed ratio (hereinafter referred to as the on-coming clutch or torque transmitting device).

The speed ratio is defined as the transmission input speed or turbine speed divided by the output speed. Thus, a lower gear range has a higher speed ratio and a higher gear range has a lower speed ratio. To perform an upshift, a change is made from a higher speed ratio to a lower speed ratio. In the type of transmission described below, an upshift is accomplished by disengaging one or more clutches associated with a higher speed ratio and engaging one or more clutches associated with a lower speed ratio, thereby to reconfigure the gear set to operate at the lower speed ratio. Shifts performed in the above manner are referred to as clutch-to-clutch shifts and require precise control in order to achieve high quality shifting. This is particularly important in situations where the throttle is fully open and where the kickdown switch has been depressed.

The present invention seeks to provide an improved method and apparatus for controlling a gear change in an automatic transmission.

According to an aspect of the present invention, there is provided a method of controlling a gear change in an automatic transmission from an off-going torque transmitting device associated with a first gear ratio to an on-coming torque transmitting device associated with a second gear ratio, comprising the steps of controlling a fill pressure applied to the on-coming torque transmitting device during a fill phase of the gear change and a shift pressure applied to the on-coming torque transmitting device during a shift phase of the gear change on the basis of engine speed.

It has been found that by using a measure of engine speed, a more reliable and efficient gear change can be carried out, particularly during upshifts.

Preferably, the method comprises the step of measuring the engine speed at a predetermined point of the gear change, determining within which one of a plurality of predetermined engine speed ranges the measured engine speed falls, and controlling the fill pressure and the shift pressure on the basis of said one engine speed range. In this manner, it is possible to store fill and shift pressures in a memory for subsequent use in gear changes of the same type, that is between the same gear ratios, and within the same engine speed ranges.

There may be provided the step of obtaining a measure of engine speed on the basis of throttle position. Throttle position can provide a useful indication of engine speed, particularly during periods of changing throttle position.

Advantageously, the fill pressure and the shift pressure are controlled substantially independently of one another. Independent control of these two pressures can ensure that during the fill phase the durability of the clutches can be improved without affecting the shift quality, while in the shift phase a high quality of shift can be maintained. It is also possible to maintain a predetermined ratio of dissipated energy between the fill and shift phases.

Preferably, the method comprises the step of obtaining a fill time representative of the duration of the fill phase, comparing the fill time to a predetermined maximum fill time limit and increasing the fill pressure when the fill time exceeds the predetermined fill time limit. If the fill pressure is too low, the fill time becomes unacceptably large. Therefore, by monitoring the fill time, it can be determined whether the fill pressure is adequate. In practice, it has been found that the fill time generally only needs to be reduced, although in some embodiments it may be necessary to increase the fill time as well.

Advantageously, the step of increasing the fill pressure includes the step of determining a dynamic fill pressure on the basis of engine operating conditions, determining a fill pressure adjustment value on the basis of the measured fill time and determining the fill pressure as a function of the dynamic fill pressure and the fill pressure adjustment value. The fill pressure may be determined as the sum of the dynamic fill pressure and the fill pressure adjustment value.

In the preferred embodiment, the method comprises the step of obtaining a shift time representative of the duration of the shift phase, determining whether the shift time falls within a predetermined range and adjusting the shift pressure when the shift time falls outside the predetermined range.

Preferably, the method comprises the step of determining a dynamic shift pressure on the basis of engine operating conditions, determining a shift pressure adjustment value on the basis of the measured shift time and determining the shift pressure as a function of the dynamic shift pressure and the shift pressure adjustment value.

The method may comprise the step of determining the difference between the measured shift time and a maximum predetermined shift time or a lower predetermined shift time and obtaining the shift pressure value on the basis of said difference.

According to another aspect of the present invention, there is provided a method of controlling a gear change in an automatic transmission from an off-going torque transmitting device associated with a first gear ratio to an on-coming torque transmitting device associated with a second gear ratio, comprising the steps of controlling a fill pressure applied to the on-coming torque transmitting device during a fill phase of the gear change and a shift pressure applied to the on-coming torque transmitting device during a shift phase of the gear change, the fill pressure and the shift pressure being controlled substantially independently of one another.

Independent control of these two pressures can ensure that during the fill phase the durability of the clutches can be improved without affecting the shift quality, while in the shift phase a high quality of shift can be maintained. It is also possible to maintain a predetermined ratio of dissipated energy between the fill and shift phases.

According to another aspect of the present invention, there is provided transmission control apparatus for controlling a gear change in an automatic transmission from an off-going torque transmitting device associated with a first gear ratio to an on-coming torque transmitting device associated with a second gear ratio; comprising engine speed sensing means for sensing engine speed, and control means comprising fill pressure control means operative to control a fill pressure applied to the on-coming torque transmitting device during a fill phase of the gear change and shift pressure control means operative to control a shift pressure applied to the on-coming torque transmitting device during a shift phase of the gear change on the basis of engine speed.

Preferably, the engine speed sensing means comprises a throttle position sensor, the controller being operative to obtain a measure of engine speed on the basis of throttle position.

According to another aspect of the present invention, there is provided transmission control apparatus for controlling a gear change in an automatic transmission from an off-going torque transmitting device associated with a first gear ratio to an on-coming torque transmitting device associated with a second gear ratio, comprising a controller including fill pressure control means operative to control a fill pressure applied to the on-coming torque transmitting device during a fill phase of the gear change and shift pressure control means operative to control a shift pressure applied to the on-coming torque transmitting device during a shift phase of the gear change substantially independently of the fill pressure control means.

An embodiment of the present invention is described below, by way of example only, with reference to the accompanying drawings, in which:

Figure 1 is a block diagram of an embodiment of fluid operated motor vehicle transmission;

Figure 2 is a series of graphs of engine speed and line pressure during an upshift; and

Figures 3A to 3C are a flow chart of an embodiment of routine for determining the hydraulic pressure to be used during upshifts in the transmission of Figure 1.

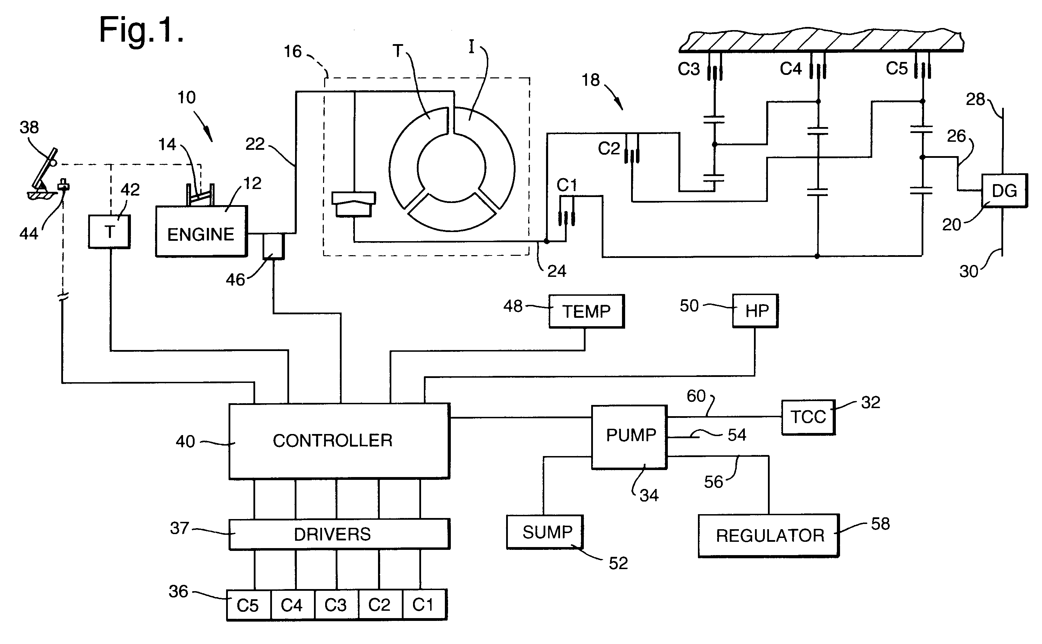

Referring to Figure 1, the example of motor vehicle drive train 10 shown includes an internal combustion engine 12 having an intake controlled by throttle 14, a fluidic torque converter 16, a fluid operated power transmission 18 and a differential gear set 20. The engine 12 is coupled to torque converter 14 via an engine output shaft 22, the torque converter 16 is coupled to the transmission 18 via a shaft 24, while the transmission 18 is coupled to differential gear set 20 via a drive shaft 26. A pair of driven wheels (not shown) of the vehicle are connected to the differential gear set 20 by prop shafts 28, 30.

Speed and torque relationships between the engine 12 and the driven wheels of the vehicle are controlled by fluid operated torque converter clutch 32 and five fluid operated transmission clutches C1-C5, driven by a hydraulic pump 34. The torque converter clutch 32 is selectively engaged by a solenoid operated valve (not shown) to connect together mechanically the impeller I and turbine T of the torque converter 16. The clutches 32, C1-C5 are selectively engageable and disengageable by associated solenoid operated valves 36 driven by a set of drivers 37 to establish one of a plurality of transmission speed ratios, for example as described in US-4,070,927. A driver actuated accelerator pedal 38 adjusts the throttle 14 so as to control engine power output.

Actuation of the solenoid operated valves 36 is controlled by a controller 40, typically a transmission control module, in response to various input signals representative of engine operating conditions. These input signals include a throttle position signal from a throttle position sensor 42, a kick down signal from a kick down switch 44, an engine speed signal from an engine output shaft speed sensor 46, a transmission temperature signal from a temperature sensor 48, and a hydraulic pressure signal from a pressure sensor 50. Other input signals include a system supply voltage signal and an operator range selector signal which indicates the range of available gears selected by the driver for use by the transmission. The sensors used for obtaining the above signals are preferably of conventional type so are not described in further detail herein.

The controller 40 comprises a number of conventional components, including a microprocessor with internal clock and memory, an input/output device and a plurality of pulse generators for feeding pulse width modulated output signals to the drivers 37 so as to actuate to de-actuate the solenoids 36 as appropriate. In this example, output signals having a low percent duty cycle fed to the solenoids 36 yield a low pressure in the clutches 32, C1-C5, while those having a high percent duty cycle yield a high pressure in the clutches 32, C1-C5.

The pump 34 is driven by the engine 12 and supplies pressurised hydraulic fluid from a sump or reservoir 52 to the clutches 32, C1-C5 through various hydraulic and electro-hydraulic valving mechanisms. Fluid in a first line 54, referred to as converter feed pressure, is directed to the torque converter 16. Similarly, fluid in a second line 56, referred to as main or line pressure, is supplied as an input to the solenoid operated control valves 36 and also to a control pressure which is directed to the solenoid of each control valve 36. Fluid in line 60 is supplied directly to the solenoid of the torque converter clutch 32.

The controller 40 controls the state of the vehicle transmission on the basis of the engine speed, the throttle position, the state of the kick down switch 44 and the driver set range of available gears. More specifically, the controller 40 has stored in its memory a plurality of look-up tables based on engine speed, throttle position and driver set gear range, for use in determining the most appropriate gear ratio for the sensed parameters. The current gear ratio is then compared to the optimum gear ratio identified from the look-up tables and, when they differ, the controller 40 generates a shift command to actuate the solenoid operated control valves 36 to disengage and engage the clutches C1-C5 as appropriate to change to the optimum gear ratio. During the change in gear ratio, the controller 40 controls the disengagement of the off-going clutch and the on-coming clutch so as to minimise the time taken for the gear change while ensuring that the change is smooth and not unduly abrupt to cause discomfort to the vehicle passengers and unnecessary wear of the clutches.

The control provided during each gear change involves adjusting independently the fill time and the shift time of the on-coming clutch by controlling the hydraulic pressure applied to the on-coming clutch during the fill and shift phases of the gear change. The fill time is the time between the electrical shift command generated by the controller 40 and the start of engine torque control, which is determined to have occurred when the engine speed drops by a predetermined amount relative to the maximum engine speed during the gear change. The shift time is the time between the start of torque control and the time when engine speed rises again as a result of substantially full engagement of the on-coming clutch.

In addition to control on a shift by shift basis, the controller 40 also accounts for long term changes in the transmission by making long term variations in the fill and shift times. The control procedure described below is directed to upshifts and is particularly useful for controlling gear changes when the throttle 14 is fully open or when the kick down switch 44 has been depressed.

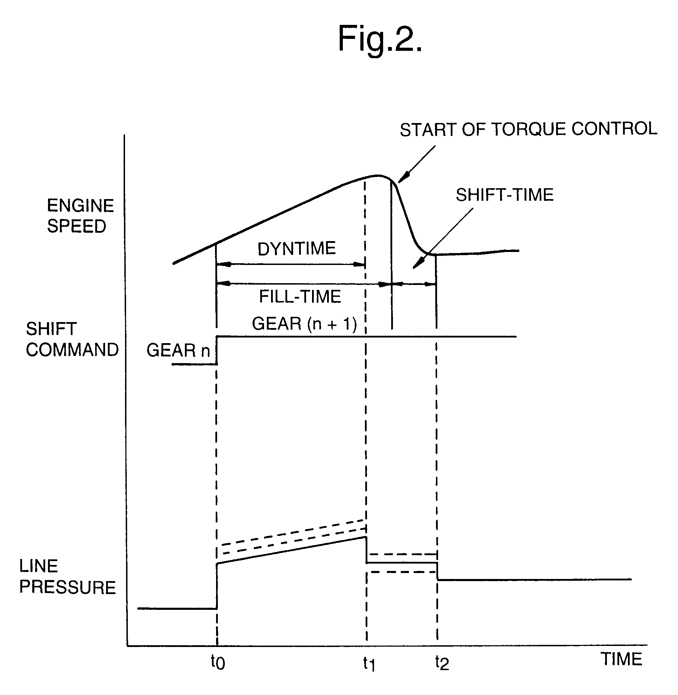

Referring to Figure 2, the top graph shows engine speed, sensed by sensor 46, during a gear change to a higher gear ratio. Prior to time $t_o$, the engine speed is increasing as a result of, for example, an increase in engine load caused by depression of the accelerator pedal 38. At time $t_o$, the engine speed reaches a point where the look-up table associated therewith indicates that a higher gear ratio is appropriate.

Thus, at time $t_o$ the controller 40 generates an upshift command from the engaged gear "n" to the next higher gear "n+1". This upshift command activates the solenoid valves 36 so as to disengage the clutches C1-C5 associated with the current gear (the off-going clutch) and to engage the clutches C1-C5 appropriate for the next higher gear (the on-coming clutch). At the same time $t_o$, the controller 40 controls the percentage duty cycle of the solenoid valves 36 associated with the on-coming clutch so as to generate an immediate step increase in line pressure at time $t_o$ and thereafter a gradual increase in line pressure for a predetermined period DYNTIME. The period DYNTIME is specific to the type of gear change and is set to be less than the average fill time for the gear change.

At the end of the predetermined period DYNTIME, that is at time $t_1$ in Figure 2, the controller 40 reduces the percentage duty cycle of the solenoids associated with the on-coming clutch by a predetermined step so as to cause a drop in the line pressure and then keeps it at a steady controlled level.

Referring to the engine speed graph of Figure 2, when the controller 40 detects a drop in the engine speed, it determines that the on-coming clutch has reached a level at which it begins to transmit torque and initiates the shift phase, during which the line pressure applied to the solenoid valves of the off-going clutch is reduced so as to disengage the off-going clutch and the line pressure applied to the on-coming clutch is increased until it is fully engaged. The line pressure applied to the on-coming clutch is kept at the steady level shown from time $t_1$ up to the end of the shift phase, that is until the off-going clutch is completely disengaged and the on-coming clutch is completely engaged.

During this phase, commonly referred to as the torque control period, the torque of the engine is controlled so as to ensure a smooth gear change. The end of the shift phase is determined to have occurred when the engine speed rises again, indicative of the on-coming clutch being completely engaged.

At the end of the shift phase, that is at time $t_2$, the controller 40 reduces the line pressure applied to the solenoids 36 associated with the on-coming clutch to the level required for normal operation.

During each upshift of the type shown in Figure 2, the controller 40 measures the durations of the fill phase and the shift phase and determines whether they fall within a calibrated range of times. If, for example as a result of long term changes in the transmission, the fill phase or the shift phase falls outside its calibrated range, the controller 40 adjusts the initial on-coming pressure applied at time $t_o$ and/or the steady pressure applied during the shift phase between times $t_1$ and $t_2$, by adjusting as appropriate the percentage duty cycle of the solenoids 36 associated with the on-coming clutch. In this manner, the line pressure is adjusted independently for both the fill phase and the shift phase. This is explained in further detail below.

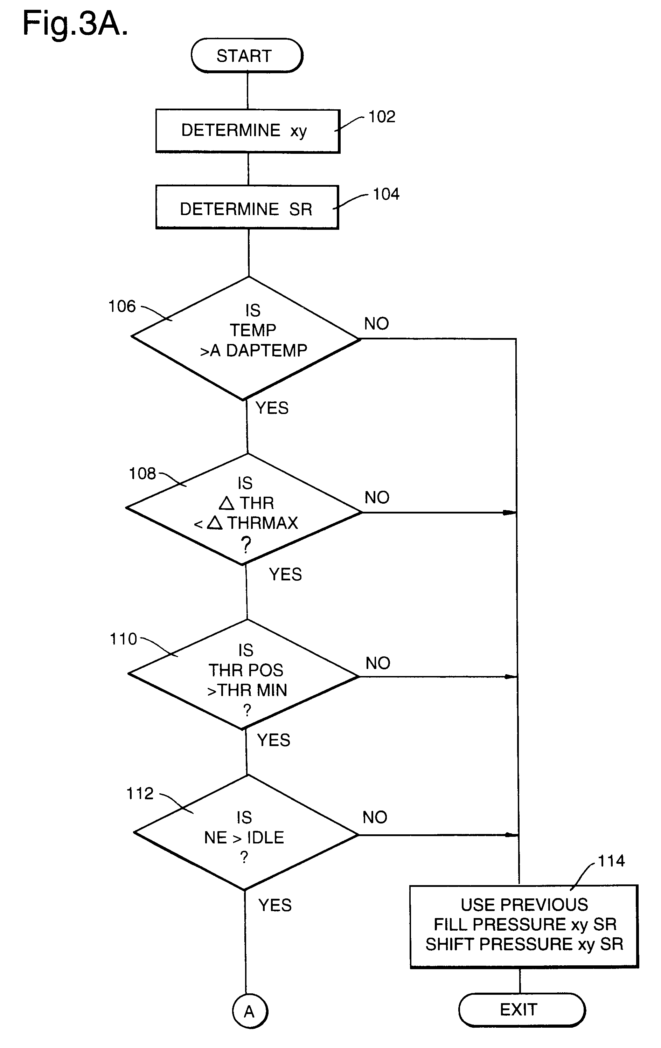

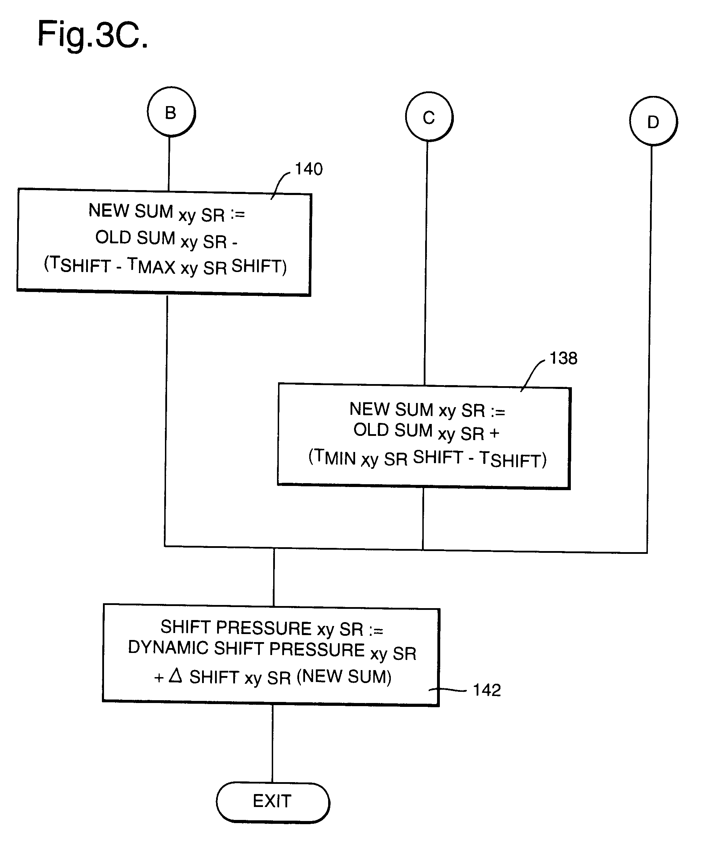

Figures 3A and 3C show an embodiment of routine for adjusting, on the basis of the measured fill time and shift time, the initial on-coming fill pressure applied at time $t_o$ and/or the shift pressure applied between times $t_1$ and $t_2$.

This embodiment operates by generating independent dynamic fill and shift pressures based on the dynamic conditions of the engine and which are controlled in closed loop manner, as is known in the art. The adjustment is made by calculating at the end of each gear change fill pressure on an shift pressure adjustment values ($\Delta$FILL and $\Delta$SHIFT) on the basis of the measured fill and shift times for the completed gear change. These adjustment values are then combined with the dynamic fill and shift pressures for a subsequent gear change of the same type, that is between the same gear ratios.

Referring to Figure 3A, the routine is actuated at the end of a gear change and commences by determining at step 102 the type of change "xy" which was performed, that is which gear ratio "x" was disengaged and which gear ratio "y" was engaged.

At step 104, the routine obtains a measure of speed range "SR" of the engine on the basis of the detected throttle position. In this embodiment, five engine speed ranges "SR" are provided: range 0, representative of a range from closed throttle to small throttle opening; range 1, representative of a range from small throttle opening to medium throttle opening; range 2, representative of a range from medium throttle opening to large throttle opening; range 3, representative of a range from large throttle opening to full throttle opening; and range 4, representative of the kick down switch having been actuated.

Although in the described embodiment, throttle position is used to estimate engine speed, engine speed could be measured directly from the engine speed sensor 46.

The type of gear change and the engine speed range are used to provide individual pressure adjustment values specific for each type and character of gear change.

Steps 106-112 determine whether the engine operating conditions are sufficiently stable to ensure that reasonable pressure adjustments values can be calculated. At step 106, the routine determines whether the transmission temperature is above a predetermined minimum temperature ADAPTEMP. The variation in throttle position $\Delta$THR during the gear change is measured at step 108 and compared to a predetermined maximum allowable variation in throttle position $\Delta$THRMAX. At step 110, the actual throttle position THRPOS is compared to a minimum allowable throttle position THRMIN. At step 112 the engine speed NE is measured to determine whether the engine is coasting, that is whether the engine speed falls within engine speed range 0.

If the transmission temperature is less than the predetermined temperature ADAPTEMP or the change in throttle position exceeds the maximum allowable change $\Delta$THRMAX or the actual throttle position is less than the minimum allowable position THRMIN or the engine speed is within speed range 0, the routine passes to step 114 to cause the controller 40 to sue the fill and shift pressure values appropriate for the detected shift type "xy" and engine speed range "SR" determined during the previous pass through the routine and which include previously determined pressure adjustment values. The routine is then left.

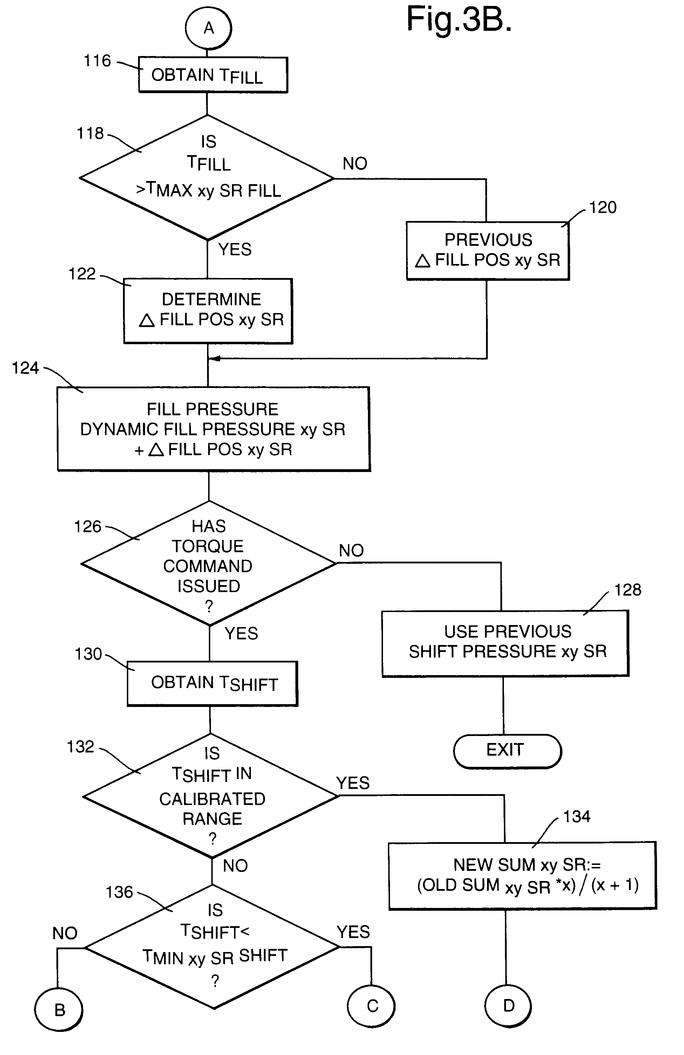

On the other hand, if it is determined at steps 106-112 that the engine operating conditions have met the given requirements, the routine passes to step 116 (Figure 3B) to obtain the fill time $T_{FILL}$ measured during the gear change and, at step 118, determines the fill time $T_{FILL}$ exceeded a maximum desirable fill time $T_{MAXFILLxySR}$ for the determined type of gear change and engine speed range. The maximum desirable fill time $T_{MAXFILLxySR}$ is selected by experiment for the particular vehicle and is intended to improve the life of the clutches C1-C5 without altering the quality of the gear change.

If the fill time $T_{FILL}$ was less than maximum desirable time, the routine passes to step 120 to obtain the fill pressure adjustment value $\Delta$FILLxySR calculated during the or a previous pass through the routine. On the other hand, if it is determined that the fill time $T_{FILL}$ exceeded the maximum time, the routine passes to step 122 to calculate a new fill pressure adjustment value $\Delta$FILLxySR for the determined type of gear change "xy" and engine speed range "SR". In this embodiment, step 122 adds a predetermined increment to the previously calculated fill pressure adjustment value up to a predetermined maximum adjustment value PFILLMAXxySR.

At step 124, the routine calculates the fill pressure to be used in subsequent gear changes of the same type "xy" and in the same speed range "SR", on the basis of a sum of the dynamic fill pressure and the adjustment value $\Delta$FILLxySR calculated at step 122 or obtained at step 120 and stores this value in memory. In alternative embodiments, a function other than a direct sum of these two pressure values may be used; for example one or both of the values may be weighted on the basis of other engine operating conditions or the like.

The fill pressure is only adjusted up to the end of the predetermined time DYNTIME.

In the embodiment shown, only adjustments which increase the fill pressure have been found to be necessary. However, in other embodiments, it may be necessary also to reduce the fill pressure, in which case the portion of the routine between steps 118 and 124 may be modified, in a manner apparent to the skilled person, to account for the possibility of negative pressure adjustments $\Delta$FILLxySR.

Following calculation of the fill pressure, the routine passes to step 126 to determined whether during the gear change being analysed a torque control command was generated (at time $t_1$ in Figure 2). If no torque control command was issued, the routine passes to step 128 which causes the controller 40 to use the shift pressure value determined during the previous pass through the routine, and the routine is then left. On the other hand, if a torque command was issued, the routine passes to step 130 to obtain the shift time $T_{SHIFT}$ measured during the gear change.

At step 132, the routine determines whether the shift time $T_{SHIFT}$ was within a predetermined calibrated range, that is above a minimum shift time $T_{MINSHIFTxySR}$ and below a maximum shift time $T_{MAXSHIFTxySR}$ for the detected type of gear change and engine speed range. If the shift time was within the calibrated range, the routine passes to step 134 to calculate a sum term (NEWSUMxySR) for the detected type of gear change and engine speed range on the basis of the following equation:

NEWSUMxySR: = (OLDSUMxySR $*$ X)/(X + 1)

in which OLDSUMxySR is the sum term calculated during a previous pass through the routine for the same type of gear change and engine speed range and X is a weighting factor having a value determined by experiment and stored in memory in the controller 40.

On the other hand, if it is determined that the shift time $T_{SHIFT}$ was outside the calibrated range, the routine passes to step 136 to determine whether it was less than the minimum desirable shift time $T_{MINSHIFTxySR}$ and if this is the case, passes to step 138 (Figure 3C). At step 138, the new sum term is calculated on the basis of the following equation:

NEWSUMxySR: = OLDSUMxySR + ($T_{MINSHIFTxySR}$ - $T_{SHIFT}$).

If the shift time $TS_{HIFT}$ was not less than the minimum shift time $T_{MINSHIFTxySR}$, it is determined that the shift time was greater than the maximum desirable shift time $T_{MAXSHIFTxySR}$ and the routine passes to step 140 at which the new sum term is calculated on the basis of the following equation:

NEWSUMxySR: = OLDSUMxySR - ($T_{SHIFT}$ - $T_{MAXSHIFTxySR}$).

Following the calculations at steps 138 and 140 when the shift time $T_{SHIFT}$ was outside the calibrated range, the routine resets to zero the value of OLDSUMxySR for subsequent passes through the routine.

The new sum term calculated at step 134, 138 or 140 is used to determined a shift pressure adjustment value $\Delta$SHIFTxySR as a function of the new sum term NEWSUMxySR. The shift pressure adjustment value $\Delta$SHIFTxySR may be positive or negative and is limited within maximum and minimum values. In this embodiment, a predetermined increment is added to the previously calculated shift pressure adjustment value $\Delta$SHIFTxySR on the basis of the new sum term NEWSUMxySR, up to or down to the predetermined maximum and minimum values.

At step 142, the routine calculates the shift pressure for the determined type of gear change and engine speed range as the sum of the dynamic shift pressure and the adjustment value $\Delta$SHIFTxySR and stores this value in memory. In alternative embodiments, the shift pressure may be determined from a function other than a direct sum of the two pressure values, for example, one or both of the values may be weighted in order to take into account other engine operating conditions or the like.

During subsequent gear changes, the controller 40 sets the fill and shift pressures for the change on the basis of the stored values determined during the previous gear change between the same gear ratios and in the same engine speed range.

As will be apparent from the above, the routine of Figures 3A to 3C adjusts the fill pressure and the shift pressure independently of one another so as to provide independent pressure control during the fill and shift phases of each gear change. The controller 40 can therefore be considered as including fill pressure control means and shift pressure control means which operate independently of one another. In this manner, it is possible to maintain a predetermined ratio of dissipated energy between the fill phase and the shift phase of each gear change.

The disclosures in British patent application no. 9403023.6, from which this application claims priority, and in the abstract accompanying this application are incorporated herein by reference.

## Claims

1. A method of controlling a gear change in an automatic transmission from an off-going torque transmitting device associated with a first gear ratio to an on-coming torque transmitting device associated with a second gear ratio, comprising the steps of controlling a fill pressure applied to the on-coming torque transmitting device during a fill phase of the gear change and a shift pressure applied to the on-coming torque transmitting device during a shift phase of the gear change on the basis of engine speed.

2. A method according to claim 1, comprising the step of measuring the engine speed at a predetermined point of the gear change, determining within which one of a plurality of predetermined engine speed ranges the measured engine speed falls, and controlling the fill pressure and the shift pressure on the basis of said one engine speed range.

3. A method according to claim 1 or 2, comprising the step of obtaining a measure of engine speed on the basis of throttle position.

4. A method according to claim 1, 2 or 3, wherein the fill pressure and the shift pressure are controlled substantially independently of one another.

5. A method according to any preceding claim, comprising the step of obtaining a fill time representative of the duration of the fill phase, comparing the fill time to a predetermined maximum fill time limit and increasing the fill pressure when the fill time exceeds the predetermined fill time limit.

6. A method according to claim 5, wherein the step of increasing the fill pressure includes the step of determining a dynamic fill pressure on the basis of engine operating conditions, determining a fill pressure adjustment value on the basis of the measured fill time and determining the fill pressure as a function of the dynamic fill pressure and the fill pressure adjustment value.

7. A method according to claim 6, wherein the fill pressure is determined as the sum of the dynamic fill pressure and the fill pressure adjustment value.

8. A method according to any preceding claim, comprising the step of obtaining a shift time representative of the duration of the shift phase, determining whether the shift time falls within a predetermined range and adjusting the shift pressure when the shift time falls outside the predetermined range.

9. A method according to claim 8, comprising the step of determining a dynamic shift pressure on the basis of engine operating conditions, determining a shift pressure adjustment value on the basis of the measured shift time and determining the shift pressure as a function of the dynamic shift pressure and the shift pressure adjustment value.

10. A method according to claim 9, comprising the step of determining the difference between the measured shift time and a maximum predetermined shift time or a lower predetermined shift time and obtaining the shift pressure value on the basis of said difference.

11. A method of controlling a gear change in an automatic transmission from an off-going torque transmitting device associated with a first gear ratio to an on-coming torque transmitting device associated with a second gear ratio, comprising the steps of controlling a fill pressure applied to the on-coming torque transmitting device during a fill phase of the gear change and a shift pressure applied to the on-coming torque transmitting device during a shift phase of the gear change, the fill pressure and the shift pressure being controlled substantially independently of one another.

12. Transmission control apparatus for controlling a gear change in an automatic transmission from an off-going torque transmitting device (C1-C5) associated with a first gear ratio to an on-coming torque transmitting device (C1-C5) associated with a second gear ratio; comprising engine speed sensing means (46,42) for sensing engine speed, and control means (40) comprising fill pressure control means operative to control a fill pressure applied to the on-coming torque transmitting device during a fill phase of the gear change and shift pressure control means operative to control a shift pressure applied to the on-coming torque transmitting device during a shift phase of the gear change on the basis of engine speed.

13. Transmission control apparatus according to claim 12, wherein the control means is operative to measure the engine speed at a predetermined point of the gear change and to determine within which one of a plurality of predetermined engine speed ranges the measured engine speed falls, the fill pressure control means and shift pressure control means being operative to control the fill pressure and the shift pressure on the basis of said one engine speed range.

14. Transmission control apparatus according to claim 12 or 13, wherein the engine speed sensing means comprises a throttle position sensor (42), the control means (40) being operative to obtain a measure of engine speed on the basis of throttle position.

15. Transmission control apparatus according to claim 12, 13 or 14, wherein the fill pressure and the shift pressure control means in use operate substantially independently of one another.

16. Transmission control apparatus according to any one of claims 12 to 15, wherein the fill pressure control means is operative to obtain a fill time representative of the duration of the fill phase, to compare the fill time to a predetermined maximum fill time limit and to increase the fill pressure when the fill time exceeds the predetermined fill time limit.

17. Transmission control apparatus according to claim 16, wherein the fill pressure control means is operative to determine the dynamic fill pressure on the basis of engine operating conditions, to determine a fill pressure adjustment value on the basis of the measured fill time and to determine the fill pressure as a function of the dynamic fill pressure and the fill pressure adjustment value.

18. Transmission control apparatus according to claim 17, wherein the fill pressure control means is operative to determine the fill pressure as the sum of the dynamic shift pressure and the shift pressure adjustment value.

19. Transmission control apparatus according to any one of claims 12 to 18, wherein the shift control means is operative to determine a shift time representative of the duration of the shift phase, to determine whether the shift time falls within a predetermined range and to adjust the shift pressure when the shift time falls outside the predetermined range.

20. Transmission control apparatus according to claim 19, wherein the shift control means is operative to determine a dynamic shift pressure on the basis of engine operating conditions, to determine a shift pressure adjustment value on the basis of the measured shift time and to determine the shift pressure as a function of the dynamic shift pressure and the shift pressure adjustment value.

21. Transmission control apparatus according to claim 20, wherein the shift pressure control means is operative to determine the difference between the measured shift time and a maximum predetermined shift time or a lower predetermined shift time and to obtain the shift pressure value on the basis of said difference.

22. Transmission control apparatus for controlling a gear change in an automatic transmission from an off-going torque transmitting device (C1-C5) associated with a first gear ratio to an on-coming torque transmitting device (C1-C5) associated with a second gear ratio, comprising a controller (40) including fill pressure control means operative to control a fill pressure applied to the on-coming torque transmitting device during a fill phase of the gear change and shift pressure control means operative to control a shift pressure applied to the on-coming torque transmitting device during a shift phase of the gear change substantially independently of the fill pressure control means.

Fig.1.

# Fig.2.

START OF TORQUE CONTROL

SHIFT-TIME

ENGINE SPEED

DYNTIME

FILL-TIME

GEAR (n + 1)

SHIFT COMMAND

GEAR n

LINE PRESSURE

t0    t1    t2    TIME

10

# Fig.3A.

START

DETERMINE xy — 102

DETERMINE SR — 104

106 — IS TEMP >A DAPTEMP → NO

YES

108 — IS △ THR <△ THRMAX ? → NO

YES

110 — IS THR POS >THR MIN ? → NO

YES

112 — IS NE > IDLE ? → NO

YES

114 — USE PREVIOUS FILL PRESSURE xy SR SHIFT PRESSURE xy SR

A

EXIT

11

# Fig.3B.

```
         ( A )

116 ─┐ ┌──────────────┐
     └─│ OBTAIN TFILL │
       └──────────────┘
              │
118 ─┐      ╱ IS ╲        NO
     └─    ╱ TFILL ╲ ─────────────┐
          ╱ >TMAX xy SR FILL ╲    │
           ╲              ╱        │
            ╲          ╱           │
              │ YES              120 ─┐
122 ─┐ ┌──────────────┐    ┌──────────────────┐
     └─│  DETERMINE   │    │    PREVIOUS      │
       │ △ FILL POS xy SR │    │ △ FILL POS xy SR │
       └──────────────┘    └──────────────────┘
              │                   │
              │◄──────────────────┘
124 ─┐
 ┌──────────────────────────────┐
 │      FILL PRESSURE           │
 │ DYNAMIC FILL PRESSURE xy SR  │
 │    + △ FILL POS xy SR        │
 └──────────────────────────────┘
              │
126 ─┐      ╱ HAS ╲
     └─    ╱ TORQUE ╲       NO
          ╱ COMMAND ╲ ──────────────┐
          ╲ ISSUED ╱                │
           ╲  ?  ╱                128 ─┐
              │ YES          ┌──────────────┐
130 ─┐ ┌──────────────┐      │ USE PREVIOUS │
     └─│ OBTAIN TSHIFT │      │ SHIFT PRESSURE xy SR │
       └──────────────┘      └──────────────┘
              │                     │
132 ─┐      ╱ IS ╲              ( EXIT )
     └─    ╱ TSHIFT IN ╲   YES
          ╱ CALIBRATED ╲ ──────────┐
          ╲ RANGE ╱                 │
           ╲  ?  ╱                134 ─┐
              │ NO          ┌──────────────────┐
136 ─┐      ╱ IS ╲           │  NEW SUM xy SR:= │
     └─ NO ╱ TSHIFT< ╲ YES   │ (OLD SUM xy SR *x)/(x + 1) │
        ──╱ TMIN xy SR SHIFT ╲──  └──────────────────┘
          ╲  ?  ╱                    │
           │                         │
         ( B )        ( C )        ( D )
```

$$\text{NEW SUM}_{xy\,SR} := \frac{(\text{OLD SUM}_{xy\,SR} * x)}{(x + 1)}$$

# Fig.3C.

B

C

D

**140**

NEW SUM $_{xy}$ SR :=
OLD SUM $_{xy}$ SR -
(T$_{SHIFT}$ - T$_{MAX\ xy\ SR\ SHIFT}$)

**138**

NEW SUM $_{xy}$ SR :=
OLD SUM $_{xy}$ SR +
(T$_{MIN\ xy\ SR\ SHIFT}$ - T$_{SHIFT}$)

SHIFT PRESSURE $_{xy}$ SR :=
DYNAMIC SHIFT PRESSURE $_{xy}$ SR
+ $\Delta$ SHIFT $_{xy}$ SR (NEW SUM)

**142**

EXIT